# EUROPEAN PATENT APPLICATION

(11) **EP 2 495 571 A2**
(43) Date of publication of application: **05.09.2012**
(21) Application number: 12157457.8
(22) Date of filing: 29.02.2012
(51) Int. Cl.: G01N 35/10

(54) **Analyzer and position confirming method**

(30) Priority: 02.03.2011 JP 2011045133
(71) Applicant: Sysmex Corporation, Kobe-shi, Hyogo 651-0073 (JP)
(72) Inventor: Yamato, Takashi, Hyogo, 651-0073 (JP)
(74) Representative: HOFFMANN EITLE

(57) **Abstract**

An analyzer comprising: a container holder; a liquid dispenser including a pipette, wherein the liquid dispenser performs a dispensing operation toward the container held in the container holder; a detector configured to measure a measurement sample prepared through the dispensing operation; a contact detector configured to detect contact between the container held in the container holder or the container holder and the pipette; and a controller configured to execute a position confirming process comprising: controlling the liquid dispenser to arrange a tip of the pipette in a plurality of positions in a horizontal direction, the plurality of positions being within an opening formed in the container held in the container holder or in the container holder; and determining whether or not the contact between the container held in the container holder or the container holder and the pipette is detected by the contact detector.

## Description

### FIELD OF THE INVENTION

The present invention relates to an analyzer and a position confirming method.

### BACKGROUND

Conventional analyzers are known which analyze samples by using pipettes to aspirate or discharge liquids such as reagents, samples, and mixtures thereof accommodated in containers such as cuvettes transported via transport units incorporating a reagent transport table, cuvette transport table, sample sampler and the like.

Over long-term use of such a sample analyzer there is gradual dislocation of the stopping position of the pipette due to deterioration of the mechanism (stretching of the drive belt and the like) that drives the reagent dispensing unit in which the pipette is installed. Note that, when the pipette is lowered and contacts the reagent container or the like while in this condition, there is concern that the pipette and the reagent container may be damaged if the lowering operation continues. There are known analyzers which detect contact between the pipette and the reagent container via a sensor, and stop the dispensing operation when such contact has been detected (for example, Japanese Laid-Open Patent Publication No. HI-221673).

In such an analyzer, however, it is possible that the dispensing operation may continue after some dislocation of the positional relationship between the pipette and the container as the pipette comes into contact with the container. Therefore, a problem arises insofar as it is unclear that positional dislocation is occurring between the container and the pipette until the pipette comes into contact with an obstacle while measuring a sample and the dispensing operation is suspended.

### SUMMARY OF THE INVENTION

The scope of the present invention is defined solely by the appended claims, and is not affected to any degree by the statements within this summary.
(1) According to a first aspect of the present invention, an analyzer comprising: a container holder for holding a container capable of accommodating a liquid; a liquid dispenser including a pipette, wherein the liquid dispenser performs a dispensing operation comprising: lowering the pipette; and at least one of aspirating the liquid accommodated in the container held in the container holder and discharging a liquid into the container held in the container holder; a detector configured to measure a measurement sample prepared from a specimen through the dispensing operation; a contact detector configured to detect contact between the container held in the container holder or the container holder and the pipette; and a controller configured to execute a position confirming process comprising: controlling the liquid dispenser to arrange a tip of the pipette in a plurality of positions in a horizontal direction, the plurality of positions being within an opening formed in the container held in the container holder or in the container holder; and determining whether or not the contact between the container held in the container holder or the container holder and the pipette is detected by the contact detector.

According to (1), the position confirming process causes the opening provided in the container held in the container transporter or the container transporter to be moved to a predetermined stop position, and disposes the tip of the pipette at a plurality of positions shifted from the center of the container or the opening. The plurality of positions are a plurality of positions in mutually different directions from the center of the container or the opening. The analyzer can confirm whether the positional adjustments of the container transporter and the liquid dispenser are normal by intensionally disposing the tip of the pipette shifted from the center of the container or the opening and determining whether there is contact between the tip of the pipette and the interior surface of the container or the opening. In other words, it is possible to confirm whether a relative positional shift has occurred between the container transporter and the liquid dispenser. When positional dislocation is confirmed, the moving operation of at least one of the container transporter and liquid dispenser is abnormal, and, hence, maintenance of the drive mechanisms of the container transporter and liquid dispenser is performed with suitable timing. By performing maintenance quickly, problems such as the pipette striking the container with resultant damage can be avoided.
(2) The analyzer of (1), wherein
the container holder is a container transporter for transporting the held container;
the controller, in the position confirming process, controls the container transporter so as to position the opening at a predetermined stop position, and controls the liquid dispenser so that the tip of the pipette can be disposed at a plurality of positions along the horizontal direction within the opening.
(3) The analyzer of (1) or (2), wherein
the plurality of positions are shifted in a horizontal direction from the center of the opening so that the directions from the center are mutually different.
(4) The analyzer of (3), wherein
the controller, in the position confirming process, disposes the tip of the pipette within the opening at a plurality of positions shifted in mutually opposite directions from the center of the opening.
(5) The analyzer of (3) or (4), wherein
the controller, in the position confirming process, disposed the tip of the pipette within the opening by lowering the pipette from a position shifted in the horizontal direction from the center of the opening.
(6) The analyzer of (5), wherein
the controller, in the position confirming process, lowers the pipette at a lower speed than when lowering the for aspirating or discharging liquid, and disposes the tip of the pipette within the opening.

According to (6), damage to the pipette can be inhibited even when the tip of the pipette makes contact.
(7) The analyzer in any of (1) through (6), further comprising:
a measurement start instruction receiver configured to receive a measurement start instruction of the liquid, wherein
the controller executes the position confirming process when the measurement start instruction receiver receives a measurement start instruction of the liquid.

According to (7) positional dislocation can be confirmed prior to performing measurements since the position confirming process is executed before measurement is performed. When positional dislocation is confirmed, the moving operation of at least one of the container transporter and liquid dispenser is abnormal, hence, maintenance of the drive mechanisms of the container transporter and liquid dispenser is performed before performing a measurement. By performing maintenance before performing the measurement, problems such as the pipette striking the container with resultant damage can be avoided.
(8) The analyzer of (7), wherein
when the measurement start instruction of the liquid is received by the measurement start instruction receiver, the controller executes the measurement of the liquid even if the contact detector has detected contacted between the container or the container holder and the pipette via the position confirming process.

According to (8), even when positional dislocation is confirmed by the position confirmation process, a measurement can be performed without stopping the measurement insofar as the positional dislocation is within acceptable limits. Therefore, a user can continue the measurement while confirming that a positional dislocation requiring maintenance is near to occurring.
(9) The analyzer of any of (1) through (8), wherein
the container transporter and the pipette are made of metal; the contact detector is an electrostatic capacity type contact detector for detecting contact between the pipette and the container holder.
(10) The analyzer of any of (3), (4) and (7) through (9), wherein
the controller, in the position confirming process, disposes the tip of the pipette at a plurality of positions shifted in a horizontal direction from the center of the opening after lowering the pipette into the opening.

(11) The analyzer in any of (1) through (10), further comprising:
a display unit for displaying the detection results of the contact detector.

According to (11), the user can confirm the occurrence of positional dislocation.
(12) The analyzer in any of (1) through (11), further comprising:
a transmitter capable of transmitting the detection result of the contact detector to outside the apparatus.

According to (12), the positional dislocation of the analyzer being operated by the user can be transmitted to the service department of a service (maintenance) company through, for example, a network. In this way the needed parts and technicians can be effectively deployed by the service company.
(13) The analyzer of any of (7) through (12), wherein
the liquid is a sample for quality control;
the measurement start instruction receiver is a quality control start instruction receiver for receiving a measurement start instruction for a sample used for quality control;
the controller executes the position confirming process when the quality control start instruction receiver receives a measurement start instruction of the sample used for quality control.

According to the structure of (13), positional dislocation can be confirmed prior to measuring a patient sample by starting the analyzer and executing the position confirmation process to perform a quality control measurement prior to measuring a patient sample. Therefore, waste of valuable patient sample can be prevented.
(14) According to a second aspect of the present invention, an analyzer comprising:
a container transporter for holding a container accommodating a liquid, and transporting the held container;
a liquid dispenser including a pipette, wherein the liquid dispenser performs a dispensing operation comprising: lowering the pipette; and at least one of aspirating the liquid accommodated in the container transported by the container transporter and discharging a liquid into the container;
a detector configured to measure a measurement sample prepared from a specimen through the dispensing operation;
a contact detector configured to detect contact between the container held in the container transporter or the container transporter and the pipette; and
a controller configured to execute a position confirming process comprising:
   controlling the container transporter to position the opening provided in the container or the container transporter at a plurality of stop positions in a horizontal direction and
   controlling the liquid dispenser to dispose the tip of the pipette within the opening at the respective stop positions; and determining whether there is contact between the container or the container transporter and the pipette via the contact detector.
(15) According to a third aspect of the present invention, an analyzer comprising:
a container holder for holding a container capable of accommodating a liquid;
a container transporter including a holder for holding a container, capable of moving the container held in the holder to the container holder, and installing a rod-shaped body used for position detection in a substantially perpendicular condition;
a detector configured to measure a measurement sample prepared from a specimen through a liquid accommodated in the container held in the container holder;
a contact detector configured to detect contact between the container held in the container holder or the container holder, and the rod-shaped body installed in the container transporter; and
a controller configured to execute a position confirming process comprising: controlling the container transporter to dispose the tip of the rod-shaped body in a plurality of positions in a horizontal direction within the opening provided in the container or the container holder; and determining whether or not the contact between the container held in the container holder or the container holder and the rod-shaped body is detected by the contact detector.
(16) According to a fourth aspect of the present invention, a pipette position confirming method in an analyzer having a container holder for holding a container capable of accommodating a liquid and a pipette for aspirating a liquid accommodated in the container held in the container holder and/or discharging liquid into the container, comprising:
   (a) disposing the tip of the pipette at a plurality of positions in a horizontal direction within an opening provided in the container or the container holder; and
   (b) outputting an alert when contact is detected between the container held in the container holder or the container holder and the pipette.

### EFFECT OF THE INVENTION

According to the analyzer and position confirmation method of the present invention, it is possible to easily confirm whether any dislocation has occurred in the relative positions of the pipette with respect to the container.

### BRIEF DESCRIPTION OF THE DRAWINGS

FIG. 1 is a perspective view showing the general structure of a sample analyzer as an embodiment of the analyzer of the present invention;
FIG. 2 is a plan view briefly showing the structure of a measuring device of the sample analyzer in FIG. 1;
FIG. 3 is a side view briefly showing the structure of a first reagent dispensing unit;
FIG. 4 is a perspective view showing an arm and a contact sensor in the first reagent dispensing unit;
FIG. 5 is a block diagram showing the structure of the measuring device of the sample analyzer;
FIG. 6 is a block diagram showing the structure of the controller of the measuring device;
FIG. 7 is a block diagram showing the structure of the control device;
FIG. 8 is a flow chart (first half) showing an example of position confirmation;
FIG. 9 is a flow chart (second half) showing an example of position confirmation;
FIG. 10 is an illustration of position confirmation;
FIG. 11 is a perspective view of an example of a cuvette;
FIG. 12 illustrates position confirmation of another embodiment;
FIG. 13 is a side view of a cuvette of another embodiment; and
FIG. 14 is a perspective view of a cuvette of still another embodiment.

### DESCRIPTION OF THE EMBODIMENTS OF THE INVENTION

The embodiments of the analyzer of the present invention are described hereinafter with reference to the accompanying drawings.

### First Embodiment

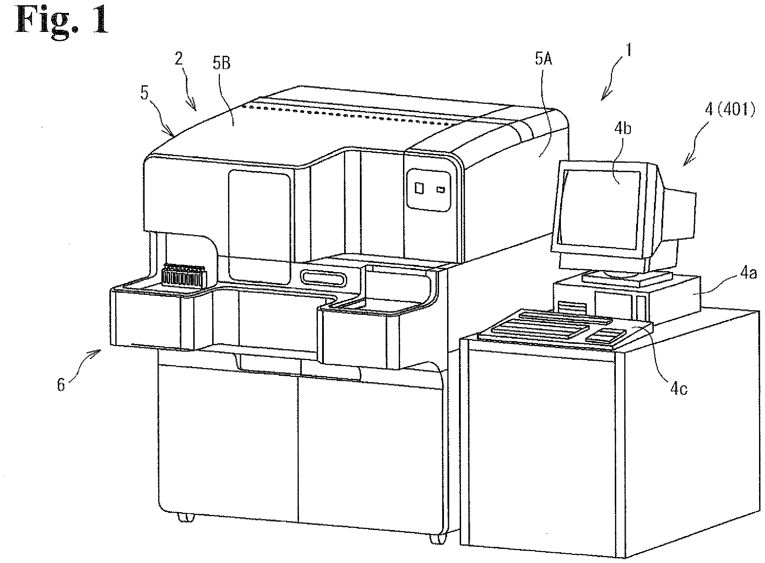

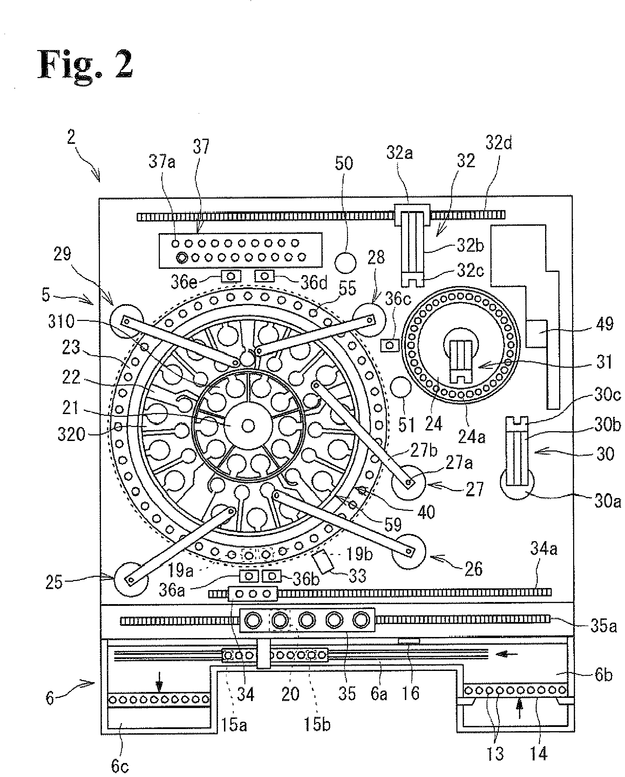

FIG. 1 is a perspective view showing the general structure of a sample analyzer 1 of a first embodiment, and FIG. 2 is a plan view briefly showing the structure of a measuring device of the sample analyzer 1.

The sample analyzer 1 is an apparatus for optically measuring and analyzing the degree of activity and amount of specific substances related to blood coagulation and fibrinolytic function. The sample analyzer 1 of the present embodiment optically measures samples using a coagulation time method, synthetic substrate method and immunoturbidimetric assay method. The coagulation time method used in the present embodiment is a measuring method for detecting the amount of change in transmission light in a process of coagulating a sample. Measurement items include PT (prothrombin time), APTT (active partial thromboplastin time), FbG (fibrinogen amount) and the like. Measurement items of the synthetic substrate method include ATIII and the like, and measurement items of the immunoturbidimetric assay method D-dimer, FDP and the like.

As shown in FIGS. 1 and 2, the sample analyzer 1 is configured by a measuring device 2, and a control device 4 which is electrically connected to the measuring device 2. The measuring device 2 is configured by a measuring unit 5 and a transport unit 6 disposed on the front side of the measuring unit 5, and the measuring unit 5 is covered by a body 5A and a cover 5B. The cover 5B is mounted on the front left side at the top part of the body 5A so as to be capable of opening and closing. Opening the cover 5B exposes the inside of the measuring unit 5A to the outside.

### Structure of the Transport Unit

As shown in FIG. 2, in order to supply a sample to the measuring unit 5, the transport unit 6 has function of transporting a sample rack 14 which holds a plurality of sample containers 13 that contains samples in lateral directions on a transport path 6a so as to position the sample containers 13 at predetermined sample aspirating positions 15a and 15b. The transport unit 6 has, at either end of the transport 6a, a rack placement area 6b for setting sample rack 14 which hold sample containers 13 containing unprocessed samples, and a rack receiving area 6c for receiving sample racks 14 which hold sample containers 13 containing processed samples. The transport unit 6 is provided with a sample barcode reader 16 for reading a barcode adhered to the sample container 13.

### Structure of the Measuring Device

The measuring unit 5 is capable of obtaining optical information related to a supplied sample by performing optical measurements on a sample supplied from the transport unit 6. In the present embodiment, a sample dispensed from a sample container 13 held in a sample rack 14 of the transport unit 6 into a cuvette of the measuring unit 5is optically measured.

The measuring unit 5 includes a first reagent table 21, second reagent table 22, cuvette table 23, heating table 24, first sample dispensing unit 25, second sample dispensing unit 26, first reagent dispensing unit 27, second reagent dispensing unit 28, third reagent dispensing unit 29, first catcher unit 30, second catcher unit 31, third catcher unit 32, reagent barcode reader 33, cuvette transporter 34, dilution liquid transporter 35, pipette washers 36a through 36e, and detection unit 37.

The first reagent table 21, second reagent table 22, cuvette table 23, and heating table 24 are circular tables which are rotated independently in clockwise and counterclockwise directions by their respective stepper motors or the like. The first reagent table 21 is driven by a reagent table drive unit 97, and the second reagent table 22 is driven by a reagent drive unit 98. The cuvette table 23 is driven by a cuvette table drive unit 142. The heating table is driven by a heating table drive unit 143.

The first reagent table 21 and the second reagent table 22 are arranged within a reagent storage 40 (reagent cooler), and a first reagent container rack 310 and a second reagent container rack 320 which hold reagent containers accommodating reagents are placed above the first reagent table 1 and second reagent table 22.

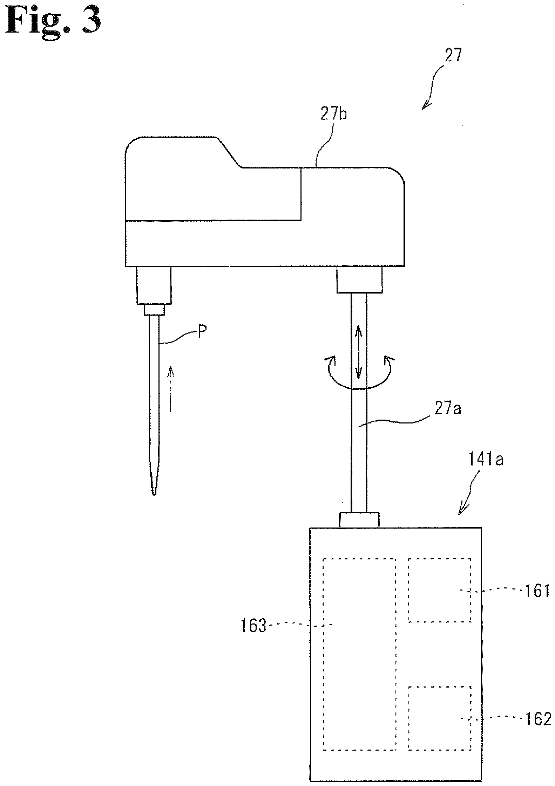

FIG. 3 is a side view briefly showing the structure of a first reagent dispensing unit 27.
The first reagent dispensing unit 27 has an arm 27b and a drive unit 141a (141) capable of moving the arm 27b in vertical directions and in rotation around a shaft 17a. A pipette P is mounted on the tip of the arm 27b to aspirate and discharge sample and the like.

The drive unit 141a has a rotation motor 161, elevator motor 162, and a transmission unit 163 for transmitting the drive force of the rotation motor 161 and the elevator motor 162 to the shaft 27a. The transmission unit 163 is configured by rack and pinion mechanism and belt transmission unit for reducing the rotational force of, for example, the rotation motor 161, and converting the rotational force of the elevator motor 162 gear devices and belt transmission for transmitting force to the shaft 27a to a direct force in vertical directions and transmitting this force to the shaft 27a. The rotation motor 161 and the elevator motor 162 ate stepper motors, and the rotational pulse of the motors is detected by encoders (not shown in the drawing).

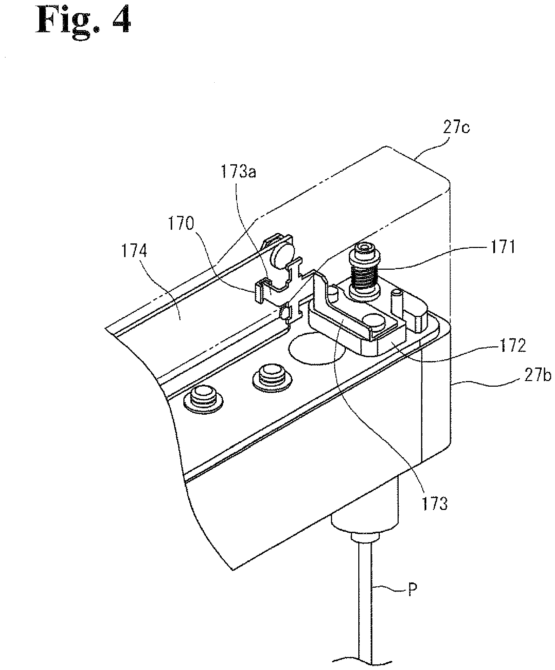

FIG. 4 is a perspective view showing an arm 27b and a contact sensor in the first reagent dispensing unit 27. FIG. 4 shows the arm 27b with the interior exposed by removing the top cover 27c (indicated by the dashed line). The pipette P is supported by the arm 27b so as to be movable in vertical directions, and the downward movement is regulated in a fixed manner. The pipette P is forced downward by a force-exerting member 171 configured by a compression coil spring. The arm 27b is provided with a seat 172 which is movable in vertical directions together with the pipette P, and a detection member 173 is mounted on the seat 172. A circuit board 174 is mounted on the arm 27b, and a contact sensor 170 is mounted on the circuit board 174.

The contact sensor 170 is a transmission type sensor with a light emitter and a light receiver. The detection member 173 has a light shield 173a disposed between the emitter and receiver of the contact sensor 170. The light shield 173a normally blocks the contact sensor 170 to set the contact sensor 170 in the OFF state. When the pipette P is lowered and strongly contacts the inner surface of the container or strikes the edge of the opening of the container, the arm 27b lifts the pipette P and cancels the light shield of the contact sensor 170 because the light shield 173a is also lifted through the seat 172. When the contact sensor 170 is turned ON in this way, the contact or striking of pipette P with the container is detected by a controller 501 which controls the operation of the first reagent dispensing unit 25 and the like.

The first sample dispensing unit 25, second sample dispensing unit 26, second reagent dispensing unit 28, and third reagent dispensing unit 29 have the same structure as the first reagent dispensing unit 27. That is, the units 25, 26, 28, and 29 each have an arm and pipette, and the arm is driven in rotation and elevation by drive units. Sample and reagent are aspirated and discharged using the pipette. The first sample dispensing unit 25 is driven by a drive unit 141b, and the second sample dispensing unit is driven by a drive unit 141c. The second reagent dispensing unit 28 is driven by a drive unit 141d, and the third reagent dispensing unit 29 is driven by a drive unit 141e.

The first catcher unit 30 is configured by a support 30a, an arm 30b which is capable of expanding and contracting while supported by the support 30a, and a grip 30c provided on the tip of the arm 30b. The arm 30b is driven in rotation by the drive unit 144a which is a stepper motor or the like, and the grip 30c holds a cuvette. The second catcher unit 31 has a structure identical to that of the first catcher unit 30, and is driven by a drive unit 144b which is a stepper motor or the like.

The third catcher unit 32 is configured by a support 32a, an arm 32b which is capable of expanding and contracting while supported by the support 32a, and a grip 32c provided on the tip of the arm 32b. The support 32a is driven by a drive unit 144c along a rail 32d arranged in a lateral direction. The grip 32c is capable of holding a cuvette.

The reagent barcode reader 33 reads a barcode adhered to the reagent container accommodated in the reagent storage, and adhered on the reagent container racks 310 and 320 which hold the reagent container. The reagent barcode reader 33 is disposed outside the reagent storage 40, and is capable of reading a barcode within the reagent storage 40 through a slit (not shown in the drawing) which is formed in the reagent storage and is opened and closed via a shutter.

The cuvette transporter 34 and the diluting liquid transporter 35 are driven laterally on rails 34a and 35a, respectively. The cuvette transporter 34 and the diluting liquid transporter 35 have receiver holes capable of holding a cuvette and diluting liquid container.

The measuring unit 5 is provided with a cuvette aperture 49 and disposal apertures 50 and 51. Normally, a new cuvette is supplied to the cuvette aperture 49. A new cuvette is placed in the receiver hole of the cuvette transporter 34 and the receiver hole of the cuvette table 23 by the first catcher unit 30 and the second catcher unit 31. The disposal apertures 50 and 51 are holes for disposing of the cuvette which is no longer needed after analysis is completed. A cuvette disposal unit (not shown in the drawing) for disposing of the discarded cuvettes is provided within the body 5A of the sample analyzer 1.

The pipette washers 36a through 36e are used to wash the pipettes of the first and second sample dispensing units 25 and 26, and the first through third reagent dispensing units 27 through 29, respectively. A hole for the insertion of a pipette in a vertical direction is formed in the pipette washers 36a through 36e, and the outside surface of the pipettes is washed with a washing liquid supplied through this hole.

The detection unit 37 has a plurality (20 in the example illustration) receiver holes 37a formed in the top surface for accommodating cuvettes, and a detecting unit (not shown in the drawing) is provided on the bottom surface side. When a cuvette is placed in the receiver hole 37a, optical information is obtained via the detecting unit relating to the reflected light of the components contained in the measurement sample in the cuvette.

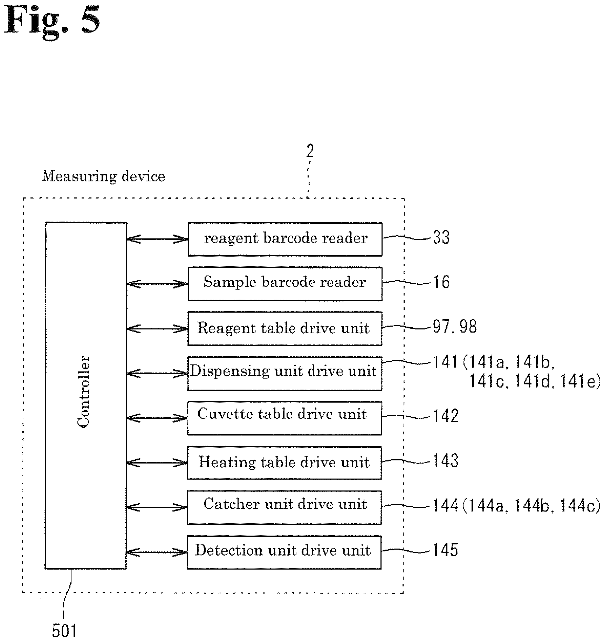

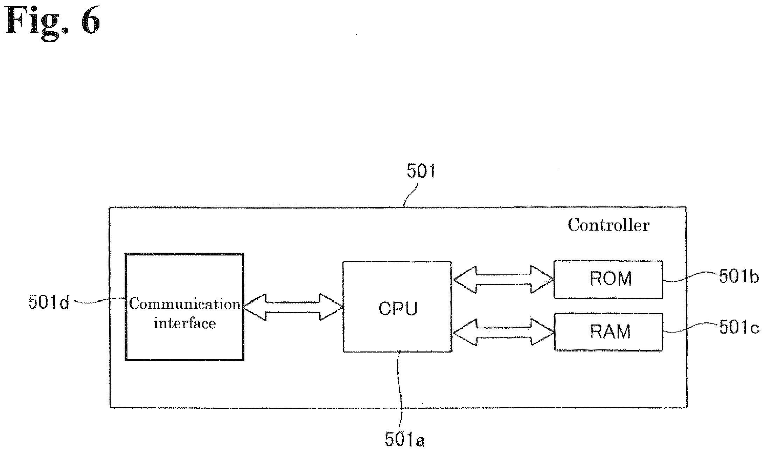

FIG. 5 is a bock diagram showing the structure of the measuring device of the sample analyzer 1, and FIG. 6 is a block diagram showing the structure of the controller of the measuring device. As shown in FIG. 5, the controller 501 is electrically connected to and controls the operation of the drive units 97, 98, 141 through 145 of the first and second reagent tables 21 and 22, cuvette table 23, heating table 24, first and second sample dispensing units 25 and 26, first through third reagent dispensing units 27 through 29, first through third catcher units 30 through 32, cuvette transporter 34, diluting liquid transporter 35, pipette washers 36a through 36e, and detection unit 37, and the reagent barcode reader 33 and sample barcode reader 16 are also electrically connected to and controlled by the controller 501 of the measuring device 2. The detection unit 37 is configured to transmit the acquired optical information to the controller 501. The drive units of the dispensing units include the drive units 141a, 141b, 141c, 141d, and 141e. The drive units of the catcher units include the drive units 144a, 144b, and 144c.

As shown in FIG. 6, the controller 501 is mainly configured by a CPU 501a, ROM 501b, RAM 501c, and communication interface 501d. The CPU 501a executes a computer program stored in the ROM 501b, and a computer program read from the RAM 501c. The ROM 501b stores a computer program executed by the CPU 501a, and data used in the execution of the computer program. The RAM 501c is used as a work area of the CPU 501a when the CPU 501a executes the computer program, read from the ROM 501b.

The communication interface 501d is connected to the control device 4, and has the functions of transmitting the optical information of a sample to the control device 4, and receiving signals from the controller 4a of the control device 4. The communication interface 501d also has the function of transmitting instructions from the CPU 501a to drive each part of the transporting device 6 and the measuring device 5.

### Structure of the Control Device

The control device 4 is a personal computer 401 (PC), and includes a controller 4a, display unit 4b, and keyboard 4c for entering information, as shown in FIG. 1. The controller 4a has the function of transmitting an operation start signal for the measuring device 5 to the controller 501 of the measuring device 5, and analyzing the optical information of a sample obtained by the measuring device 5. The display unit 4b is provided to display information relating to interference substances (hemoglobin, milk (lipid), bilirubin) present in a sample, and the analysis results obtained by the controller 4a.

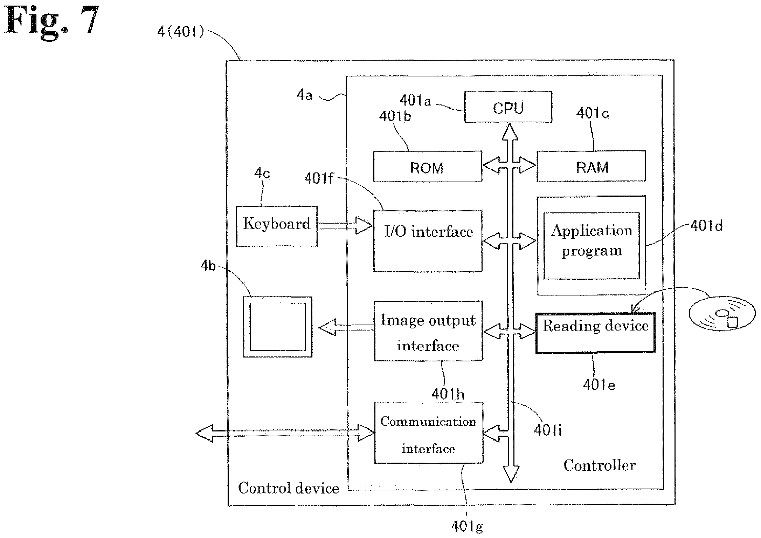

FIG. 7 is a block diagram showing the structure of the control device 4. The controller 4a is mainly configured by a CPU 401a, ROM 401b, RAM 401c, hard disk 401d, reading device 401e, input/output interface 401f, communication interface 401g, and image output interface 401h. The CPU 401a, ROM 401b, RAM 401c, hard disk 401d, reading device 401e, input/output interface 401f, communication interface 401g, and image output interface 401h are connected by a bus 401i.

### Measuring Device Operation Summary

A summary of the operation of the measuring device 2 is described below. As shown in FIG. 2, when a sample rack 14 holding a sample container 13 is placed in the rack placement area 6b of the transport device 6, the sample rack 14 is moved to the back end (top side in the drawing) in the rack placement area 6b, then transported leftward on the transport path 6a. The barcode adhered to the sample container 13 is read by the barcode reader 16, then the sample container 13 is positioned at a predetermined sample aspirating position 15a. Note that the sample rack 14 is moved to the rack receiving area 6c after all samples have been aspirated.

The first sample dispensing unit 25 aspirates the sample from the sample container 13 positioned at the predetermined sample aspirating position 15v by the transport device 6. The sample aspirated by the first sample dispensing unit 25 is then discharged into a cuvette set in a cuvette receiving hole 55 positioned at the front sample discharging position of the cuvette table 23.

The second sample dispensing unit 26 aspirates sample contained in a cuvette placed in the cuvette receiving hole 55 at the front sample aspirating position 19b of the cuvette table 23, or sample in the sample container 13 positioned at the predetermined sample aspirating position 15b by the transport device 6. The sample aspirated by the second sample dispensing unit 26 is discharged into the cuvette placed an the cuvette transporter 34. Note that the second sample dispensing unit 26 can aspirate diluting liquid placed in the diluting liquid transporter 35. In this case, the second sample dispensing unit 26 aspirates the sample at the sample aspirating position 15b after aspirating the diluting liquid at the diluting liquid aspirating position 20, that is, before aspirating the sample.

When the first sample dispensing unit 25 and the second sample dispensing unit 26 complete the dispensing operation, the respective pipettes are inserted into the pipette washers 36a and 36b, and then washed by washing liquid supplied to these holes.

When the sample is aspirated from the cuvette, the cuvette transporter 34 is driven rightward on the rail 34a with a predetermined timing. Then, the cuvette containing the sample placed in the cuvette transporter 34 by the first catcher unit 30 is placed in the cuvette receiving hole 24a of the heating table 24.

The second catcher unit 31 grips the cuvette containing the sample placed in the receiver hole 24a, and moves the cuvette directly above the pipette washer 36c. The first reagent dispensing unit 27 then aspirates the reagent within a predetermined reagent container disposed on the first reagent table 21 or the second reagent table 22, and discharges the reagent into the cuvette held by the second catcher unit 31. The second catcher unit 31 mixes the agitates the cuvette containing the discharged reagent, and places the cuvette in the cuvette receiver hole 24a of the heating table 24.

The cuvette held in the cuvette receiving hole 24a of the heating table 24 is gripped by the third catcher unit 32, and positioned directly above the area of the pipette washer 36e or directly above the area of the pipette washer 36e. The second reagent dispensing unit 28 and the third reagent dispensing unit 29 then aspirate reagent from a reagent container disposed on the first reagent table 21 or the second reagent table 22, and discharges the reagent into the cuvette held by the third catcher unit 32. The third catcher unit 32 places the cuvette containing the discharged reagent into the receiving hole 37a of the detection unit 37. Thereafter, in the detection unit 37, the optical information is detected from the measurement sample in the cuvette.

When the dispensing operation ends, the first through third reagent dispensing units 27 through 29 insert the respective pipettes into the holes of the pipette washers 36c through 36e where they are washed each time different reagent is dispensed. After detection by the detection unit 37 ends, the unneeded cuvette is held by the third catcher unit 32 and discarded in the disposal aperture 50. The cuvette held in the cuvette receiving hole 55 of the cuvette table 23 is unneeded when the analysis is completed, and is positioned near the second catcher 31 by rotating the cuvette table 23. The second catcher unit 31 grips the unneeded cuvette held in the cuvette receiving hole 51 and discards the cuvette in the disposal aperture 50.

### Confirming Positional Dislocation

In the sample analyzer 1 of the present embodiment, whether the relative position of the pipette and cuvette container has shifted is confirmed (position confirmation) before measuring a quality control sample, which is performed, for example, once each day before starting an analysis operation. In the present embodiment, position confirmation detection errors (described in steps S7 and S12 below) indicate contact detection in which the pipette comes into contact with the inner wall of the cuvette, and the pipette strikes the top surface of the flange 41 of the cuvette.

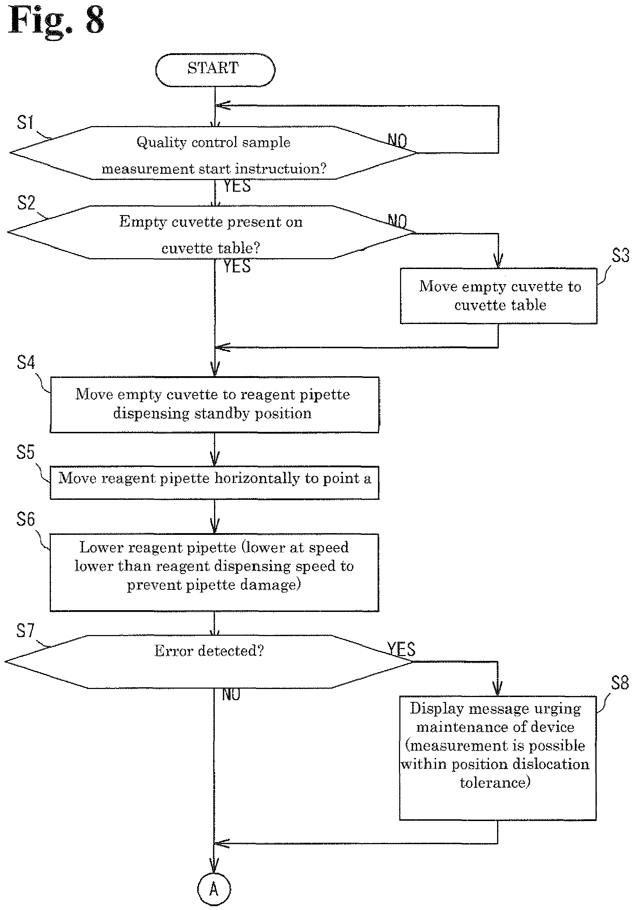

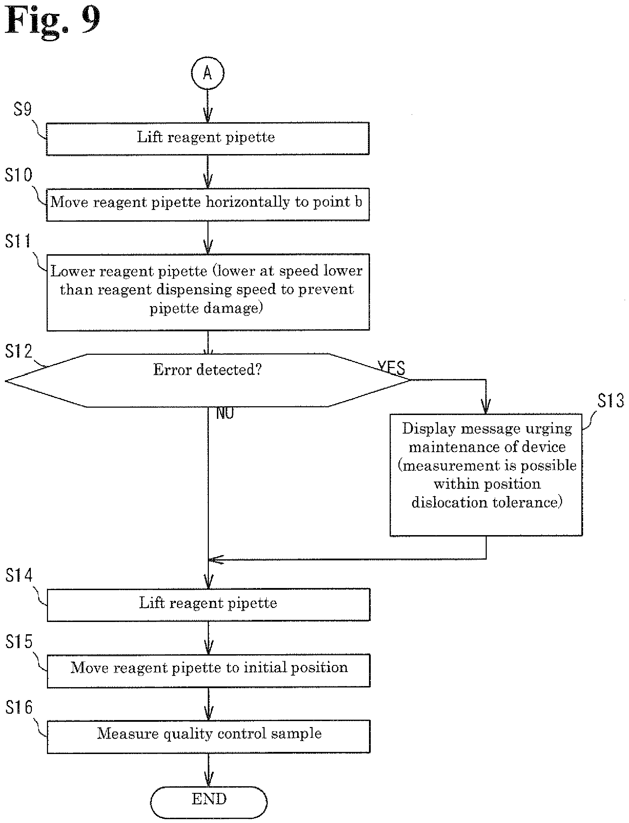

FIGS. 8 and 9 are flow charts of the quality control sample measurement which includes an example of this position confirmation (steps S2 through S15). FIG. 8 shows the first half and FIG. 9 shows the second half of the flow chart, with point A being the linking point. Although this example is conveniently described in terms of performing position confirmation of the first reagent dispensing unit 27 and the cuvette table 23, the present embodiment of the sample analyzer 1 has a plurality of combinations of container transporters for transporting containers and pipettes as shown in Table 1 below, wherein position confirmation is similarly performed to the flow shown in FIGS. 8 and 9. In Table 1, a pipette installed in, for example, the first dispensing unit 27 may aspirate sample in a container disposed in the cuvette table 23, first reagent table 21, second reagent table 22, and heating table 24, or discharge liquid into these containers. Therefore, it is necessary to perform position confirmation between the pipette installed in the first reagent dispensing unit 27 and the container at a predetermined position (liquid aspirating and discharging positions) of a container transporter, such as the cuvette table 23.

**Table 1**

| Pipette | Container transporter |
|---|---|
| | Cuvette table 23 |
| First reagent dispensing unit 27 | First reagent table 21 |
| | Second reagent table 22 |
| | Heating table 24 |
| | Cuvette table 23 |
| Second reagent dispensing unit 28 | First reagent table 21 |
| | Second reagent table 22 |
| | Heating table 24 |
| | Cuvette table 23 |
| Third reagent dispensing unit 29 | First reagent table 21 |
| | Second reagent table 22 |
| | Heating table 24 |
| | Transport device 6 |
| First sample dispensing unit 25 | Cuvette table 23 |
| | Cuvette transporter 34 |
| | Transport device 6 |
| Second sample dispensing unit 26 | Cuvette table 23 |
| | Cuvette transporter 34 |

FIG. 8 describes the measurement of the quality control sample which includes position confirmation (steps S2 through S15). A measurement start instruction for the quality control sample can be issued by a user touching the screen of the display unit 4b or operating the keyboard 4c while displaying on the display unit 4b the quality control screen for measuring the quality control sample. In this way the controller 4a of the control device 4 transmits a measurement start signal to the controller 501 of the measuring device 2. After the measuring device 2 is started, in step S1 the controller 501 of the measuring device 2 determines whether a measurement start instruction for a quality control sample has been received from the control device 4. When the controller 501 determines that a measurement start instruction has been received (YES), the process advances to step S2.

In step S2, the controller 501 of the measuring device 2 determines whether an empty cuvette (container) to be used for position confirmation is present on the cuvette table 23. This determination is made, for example, based on a signal from a reflective type sensor disposed at the cuvette receiving hole. The process advances to step S4 when the controller 501 has determined that an empty cuvette is present in the cuvette table 23 (YES), whereas the process advances to step S3 when the controller 501 has determined that there is no empty cuvette present in the cuvette table 23.

In step S3, the controller 501 of the measuring device 2 actuates the second catcher unit 31 via the drive unit 144b to move an empty cuvette supplied from the cuvette aperture 49 to a predetermined position in the cuvette table 23.
In step S4, the controller 501 of the measuring device 2 actuates the cuvette table drive unit 142 to move the empty cuvette disposed in the cuvette table 23 to a predetermined stop position, that is, to a dispensing standby position of the pipette installed in the first reagent dispensing unit 27. In parallel with the movement of the empty cuvette or subsequent to the movement of the empty cuvette, the controller 501 actuates the drive unit 141a of the first reagent dispensing unit 27 to move the pipette installed in the first reagent dispensing unit 27 to a predetermined standby position.

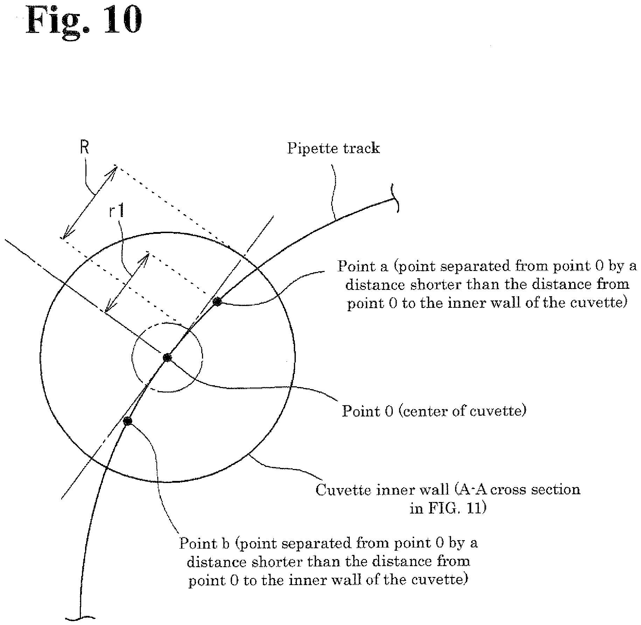

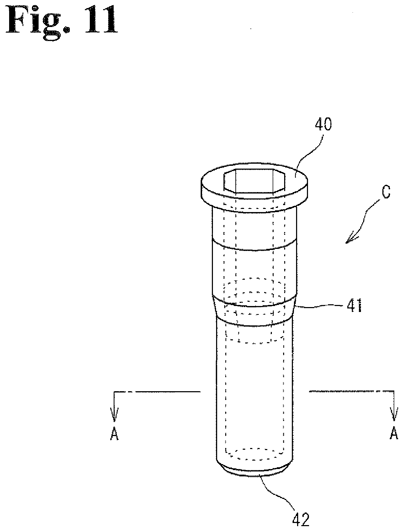

In step S5, the controller 501 of the measuring device 2 actuates the drive unit 141a of the first reagent dispensing unit 27 to horizontally move the pipette installed in the first reagent dispensing unit 27 to a first position (point a in FIG. 10) shifted from the center of the cuvette. FIG. 10 illustrates position confirmation in the present embodiment by schematically showing the track of the pipette and the inner wall of the cuvette. As shown in FIG. 11, the cuvette C is a cylindrical body with a bottom and open on one end, with a flange 40 formed on the edge of the open end. A reduced diameter part 41 is formed near the center in the longitudinal direction of the cuvette C, and the cross section (A-A cross section) from the reduced diameter part 41 to the bottom 42 is circular.

Point a is separated from point 0 a shorter distance than the distance from point 0 at the center of the cuvette to the inner wall of the cuvette. Point a is set based on the distance R from the inner wall of the cuvette and the outer wall (indicated by the dashed line in FIG. 10) of the pipette disposed within the cuvette so that the center matches the center 0 of the cuvette. Specifically, point a is set so that the distance r1 from point 0 is, for example, 0.7 to 0.8R. When the distance r1 is set at 0.8R, insofar as the positional adjustment of the pipette and cuvette is accurate, the pipette does not contact the inner wall of the cuvette because there is an assured clearance of R-0.8R=0.2R between the inner wall of the cuvette and the outer wall of the pipette even when the pipette is inserted in the cuvette at point a which is shifted by a distance 0.8R from the center point 0 of the cuvette.

In other words, when the relative position of the pipette and cuvette is shifted more than 0.2R, the pipette may contact the inner wall of the cuvette as the cuvette descends at point a, or similarly the pipette may strike the top surface of the flange 41 of the cuvette. In sample analyzers using pipettes, an error is undetectable during dispensing when the pipette is inserted into the container even when the descent position of the pipette is somewhat shifted from the center of the container. However, the condition in which the descent position is shifted in this manner is preferably corrected by positional adjustment of the pipette and cuvette by performing early maintenance since the pipette may strike the container without being inserted into the container if the analysis operation is allowed to continue. According to the present embodiment, when the descent position of the pipette is shifted a predetermined distance from the center 0 of the cuvette, the error is detectable because the pipette contacts the cuvette at the descent position at point a or point b (described later). In the present embodiment, damage to the pipette and interruption of the analysis operation due to such damage can be prevented by rapidly detecting a shift in the relative positions of the pipette and cuvette.

In step S6, the controller 501 of the measuring device 2 actuates the drive unit 141a of the first reagent dispensing unit 27 to lower the pipette installed in the first reagent dispensing unit 27. The rate of descent at this time is a lower speed than during reagent dispensing in the normal analysis operation to prevent damage to the pipette due to striking the cuvette. Specifically, the rate of descent at this time is approximately 1/4 to 1/2 (for example, 320 mm/s) the rate of descent during the reagent dispensing operation.

When the tip of the descending pipette forcibly contacts the inner wall of the cuvette C or the strikes the flange 40 of the cuvette C, this contact or impact is detected by a contact detector configured by a detection member 173 and contact sensor 173 of the first reagent dispensing unit 27.

In step S7, the controller 501 of the measuring device 2 determines whether an error has been detected. When the controller 501 of the measuring device 2 determines that an error has been detected (YES), the process advances to step S8, whereas the process advances to step S9 when the controller 501 determines that no error has been detected (NO). The determination as to whether an error is detected is made based on a signal from the contact detector configured by the detection member 173 and the contact sensor 170.

In step S8, the controller 501 of the measuring device 2 transmits an error detection signal to the control device 4, and after the control device 4 receives the error detection signal, the control device 4 displays a message urging device maintenance on the display unit 4b. This message includes the parts requiring maintenance are the first reagent dispensing unit 27 and cuvette table 23. The user requests maintenance by the service company pursuant to this message. When considering detection of an error resulting from an intentional shifting of the descent position of the pipette from the center, the measurement itself, which is a result of the measurement start instruction for the quality control sample received in step S1, will continue since this positional shifting will be within the tolerance range (that is, there will be no contact or impact during descent at the predetermined position unshifted from the center). That is, maintenance is performed after completing the measurement started by the measurement start instruction for a quality control sample received in step S1 Note that, if the pipette should happen to contact or strike the cuvette during actual measurement, the movement of the pipette is stopped at that moment based on the detection signal from the contact detection unit.

The present embodiment detects a shift in the relative positions of the pipette installed in the first reagent dispensing unit 27 and the cuvette disposed in the cuvette table 23 is detected. In this case, the shift in the relative positions arises from an anomaly in the drive units of the first reagent dispensing unit 27 and/or the cuvette table 23, and the maintenance operation must include inspection of both the first reagent dispensing unit 27 and the cuvette table 23.

In step S9, the controller 501 of the measuring device 2 actuates the drive unit of the first reagent dispensing unit 27 to lift the pipette from the descent position.

In step S10, the controller 501 of the measuring device 2 actuates the drive unit 141a of the first reagent dispensing unit 27 to horizontally move the pipette installed in the first reagent dispensing unit 27 to a second position (point b in FIG. 10) shifted from the center of the cuvette. Point b is separated from point 0 a shorter distance than the distance from point 0 at the center of the cuvette to the inner wall of the cuvette. Point b is shifted from center of the cuvette in the opposite direction from point a. Point b is set based on the distance R from the inner wall of the cuvette and the outer wall (indicated by the dashed line in FIG. 10) of the pipette disposed within the cuvette so that the center matches the center 0 of the cuvette, similar to point a. Specifically, point b is set so that the distance r2 from point 0 is, for example, 0.7 to 0.8R.

In step S11, the controller 501 of the measuring device 2 actuates the drive unit 141a of the first reagent dispensing unit 27 to lower the pipette installed in the first reagent dispensing unit 27. The rate of descent at this time is a lower speed than during reagent dispensing in the normal analysis operation to prevent damage to the pipette due to striking the cuvette, similar to step S6.

In step S12, the controller 501 of the measuring device 2 determines whether an error has been detected. When the controller 501 of the measuring device 2 determines that an error has been detected (YES), the process advances to step S13, whereas the process advances to step S14 when the controller 501 determines that no error has been detected (NO). The determination as to whether an error is detected is made based on a signal from the contact detector configured by the detection member 173 and the contact sensor 170.

In step S13, the controller 501 of the measuring device 2 transmits an error detection signal to the control device 4, and after the control device 4 receives the error detection signal, the control device 4 displays a message urging device maintenance on the display unit 4b, similar to step S8.
In step S14, the controller 501 of the measuring device 2 actuates the drive unit 141a of the first reagent dispensing unit 27 to lift the pipette from the descent position.

In step S15, the controller 501 of the measuring device 2 actuates the drive unit 141a of the first reagent dispensing unit 27 to move the pipette installed in the first reagent dispensing unit 27 to the initial position.

Note that in the position confirmation shown in FIGS. 8 and 9 is an example wherein the measurement of the quality control sample is performed after confirming the positions of the first reagent dispensing unit 27 and the cuvette table 23; in practice measurement of the quality control sample is performed after confirming the position of any combination shown in Table 1. In this case, position confirmation may be sequentially performed for eighteen combinations, or a plurality of combinations may be performed in parallel. For example, to avoid confirmation redundancy, position confirmation can be performed for the first reagent dispensing unit 27 and the cuvette table 23 in parallel with performing position confirmation for the second sample dispensing unit 26 and the transport device 6. The time required for position confirmation can thus be reduced by performing position confirmations in parallel. Parallel position confirmation may also be performed for the container moving unit and table which are described later (refer to Table 2).

### Second Embodiment

Although the pipette is lowered at a plurality of positions shifted from the center of the container to confirm the positions of the pipette and container in the first embodiment described above, in the second embodiment, the tip of the pipette is moved to a plurality of stop positions of a container, and is disposed within the container at the stop position. In this case, the movement of the table or the like on which the container is placed is controlled so that the center of the container is positioned in a mutually different direction (mutually opposite directions) using the center axis of the pipette at a plurality of stop positions as standards.

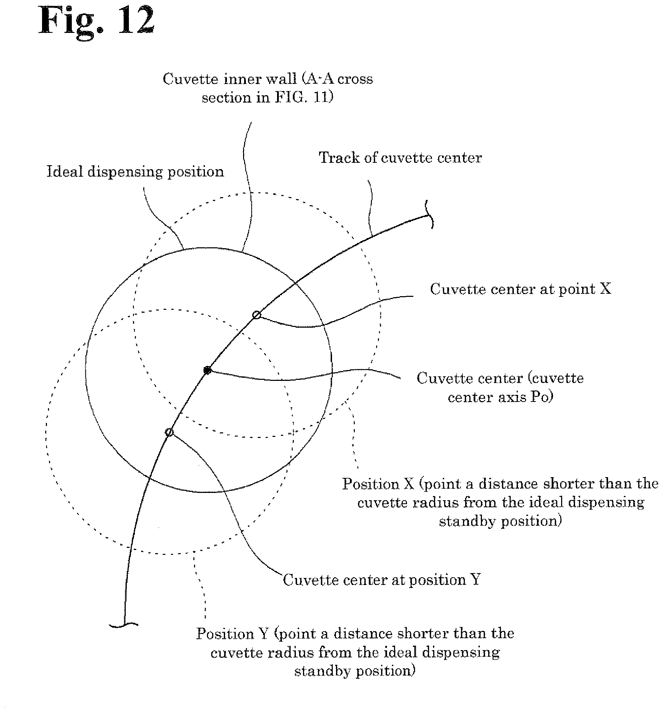

FIG. 12 illustrates position confirmation in the second embodiment. In FIG. 12, the solid line circle indicates the inner wall (inner wall on the A-A cross section in FIG. 11) of the cuvette at the ideal dispensing position; the center of the cuvette and the center axis Po of the pipette match. The circles indicated by the dashed lines indicate the position X and position Y in mutually opposite directions using the center axis Po of the pipette as a standard. Position X and position Y are shifted a distance from the ideal dispensing standby position indicated by the solid line, this distance being shorter than the difference between the cuvette radius and the pipette radius. More specifically the position is shifted a distance which is shorter than the distance between the inner wall of the cuvette and the outer wall of the pipette inserted into the cuvette so that the center matches the center of the cuvette.

In the second embodiment, whether a shift in the relative positions of the pipette and cuvette exceeds a predetermined amount can be confirmed similar to the first embodiment.
Note that the track drawn in FIG. 12 is the track of the center of the cuvette.

### Third Embodiment

Although the shift in the relative positions of the pipette and the cuvette are confirmed in the first and second embodiments, in the third embodiment the shift is confirmed of the relative positions of the receiving hole into which the container is to be inserted and the container held in the container mover for holding and moving a container. The cuvette is moved using the first through third catcher units during analysis, and the cuvette cannot be inserted into the receiving hole when the shift between the center of the cuvette held in the catcher unit and the center of the receiving hole into which the cuvette is to be inserted exceeds a predetermined amount. Therefore, it is possible to prevent a situation in which the cuvette cannot be inserted into the receiving hole by confirming the relative positions once a day prior to the analysis operation similar to the first embodiment in which such a dislocation was discussed.

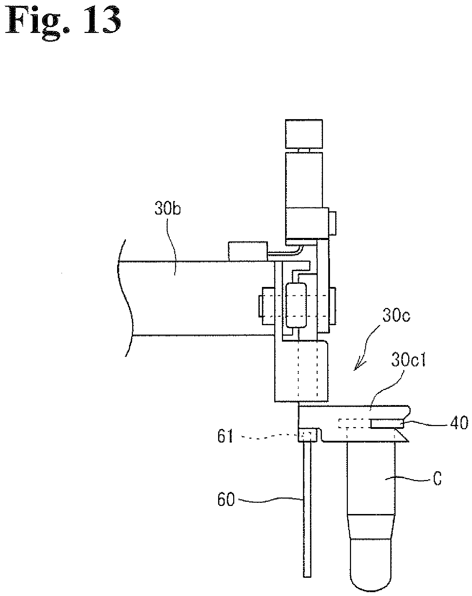

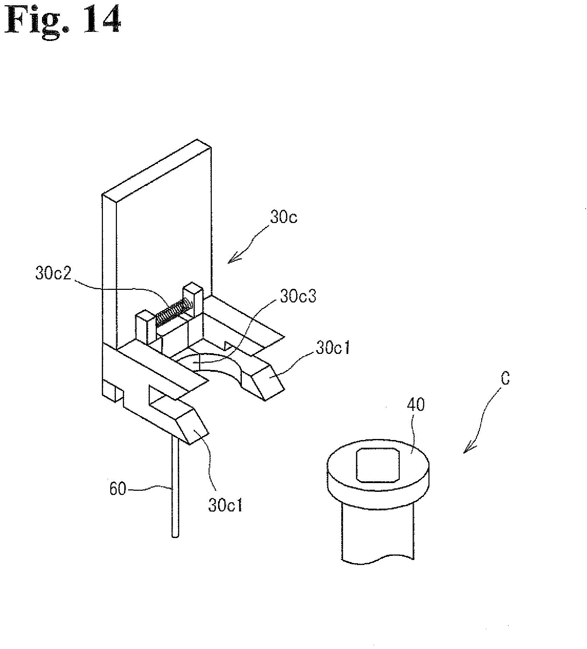

FIG. 13 is a side view of the holder 30c of the first catcher unit 30 in the sample analyzer of the third embodiment, and FIG. 14 is similarly a perspective view. As shown in FIGS. 13 and 14, the first catcher unit 30 is capable of holding a cuvette C sandwiched in a holder 30c provided on the tip of an arm 30b. The first catcher unit 30 supplied the held cuvette C to the heating table 24 and the like by rotating the arm 30b while holding the cuvette C.

The holder 30c has a pair of holding members 30c1 with a bifurcated shape to grip the flange 40 of the cuvette C, and a compression coil spring 30c2 for forcing the pair of holding members 30c1 toward each other. The flange 40 of the cuvette C is held by the holders 30c by the bifurcated part of the holding members 30c1 which are mutually forced toward each other.

In the first catcher unit 30 of the present embodiment, a hole 61 is formed for installing a metal rod-shaped body 60 used for position inspection on the bottom surface of a member 30c3 between the pair of holding members 30c1. This hole 61 is formed at the center position when the holder 30 of the first catcher unit 30 is viewed from the front (viewed from the right side in FIG. 13). The end of the rod-shaped body is selected to have a thickness that allows the body to be fitted into the hole 61. Note that a female thread may be formed on the inner surface of the hole 61 so that the male thread formed on the end of the rod-shaped body 60 can be screwed in.

The first catcher 30 is provided with an electrostatic capacitance type contact detector, and the heating table 24 is made of metal. Therefore, the electrostatic capacitance type contact detector can detect contact between the metal rod-shaped body 60 and the inner wall of the receiving hole of the heating table 24.

In the present embodiment, a shift in relative position can be confirmed between the receiving hole in which the container is to be placed and the container held in the container mover for holding and moving the container by placing the metal rod-shaped body 60 within the receiving hole at a plurality of positions in mutually different directions, the plurality of positions being shifted from the center of the receiving hole. In this case, placing the rod-shaped body 60 in the receiving hole at a plurality of positions in mutually different directions from the center, the plurality of positions being shifted from the center of the receiving hole, is accomplished by driving the heating table 24. Since there is some shift (lateral direction in FIG. 13) between the center axis of the rod-shaped body 60 and the center position of the container held in the pair of holding members 30c1, a position confirmation operation must be performed after the first catcher unit 30 advances a set distance after taking up the container.

In the above description, the heating table 24 is driven to allow placement in the receiving hole at a plurality of positions in mutually different directions from the center at a plurality of positions shifted from the center of the receiving hole; however. placement within the receiving hole at a plurality of positions in mutually different directions from the center at a plurality of positions shifted from the center of the receiving hole also may be accomplished by driving the first catcher unit 30. In the sample analyzer 1 described above, there are a plurality of combinations possible, such as the container mover holding the container and the table in which the container is to be placed, and position confirmation can be performed for each such combination as shown in FIG. 2.

**Table 2**

| Container mover | Table |
|---|---|
| | Cuvette transporter 34 |
| First catcher unit 30 | Heating table 24 |
| | Cuvette table 23 |
| Second catcher unit 31 | Heating table 24 |
| Third catcher unit 32 | Heating table 24 |

Note that the present invention is not limited to the above described embodiments and may be variously modified insofar as such modification are within the scope of the claims. For example, although position confirmation is performed during measurement of the quality control sample in the above embodiments, the operation also may be executed during measurement of a patient sample, or a position confirmation start button may be displayed on the display unit so that the user may also press the button to execute the operation.

Although the position confirmation result is displayed on the display unit in the above embodiments, the results also may be transmitted from a transmitter of the control device to a server at the service (maintenance) company through a network without display on the display unit or in addition to display on the display unit. In this way the needed parts and technicians can be effectively deployed by the service company.

Although position confirmation is performed with the pipette inserted into a cuvette held in the receiving hole of the cuvette table in the above embodiments, it is to be noted that position confirmation also may be performed with the pipette inserted in the receiving hole (opening) for holding the cuvette. Furthermore, the opening for position confirmation also may be provided in a table such as the cuvette table or the like rather than in the receiving hole for holding the cuvette.

Although the pipette is lowered to perform position confirmation after the pipette is shifted in a horizontal direction in the above embodiments, the pipette also may be lowered at the center position of the cuvette then inserted into the cuvette, and subsequently shifting the pipette in a horizontal direction to perform position confirmation.

Although the contact between the pipette and cuvette is optically detected using a contact detector configured by a contact member 173 and a contact sensor 170 in the above embodiments, an electrostatic capacitance type contact detector also may be used when the container transporter and pipette are made of metal. Since the contact detector configured by the detection member 173 and contact sensor 170 is a device for detecting movement in the axial direction of the pipette, detection is not possible when there is not movement in the axial direction of the pipette simply by contact between the outer surface of the pipette and the inner surface of the cuvette. In this case, an electrostatic capacitance type contact detector can detect contact between the outer surface of the pipette and the inner wall of the cuvette and is effective as a contact detector when the pipette is lowered prior to moving horizontally.

Although the measurement is permitted to continue even though an error message is displayed on the display unit when result error is detected in the position confirmation in the above embodiments, a process may be executed to lower the pipette at the center of an empty cuvette (predetermined dispensing position of the pipette and not a position shifted from the ideal center) before starting the measurement of the quality control sample. In this case, confirming that the pipette can be inserted at the center position avoids a situation wherein the pipette contacts or strikes the cuvette during a measurement and interrupts the operation. Wasting sample and reagent up until the operation is interrupting during measurement is also avoided.

Although the pipette is mounted at the end of a movable arm and moved within a horizontal plane along a circular track in the above embodiments, the present invention may also be applied to a device for moving the pipette within a horizontal plane along mutually perpendicular X axis and Y axis.

Although the present invention is adapted to a blood coagulation measuring apparatus in the above embodiments, the present invention is also applicable to other clinical sample analyzers such as immunoanalyzers, biochemical measuring apparatuses and the like.

## Claims

1. An analyzer comprising:
a container holder for holding a container capable of accommodating a liquid;
a liquid dispenser including a pipette, wherein the liquid dispenser performs a dispensing operation comprising: lowering the pipette; and at least one of aspirating the liquid accommodated in the container held in the container holder and discharging a liquid into the container held in the container holder;
a detector configured to measure a measurement sample prepared from a specimen through the dispensing operation;
a contact detector configured to detect contact between the container held in the container holder or the container holder and the pipette; and
a controller configured to execute a position confirming process comprising: controlling the liquid dispenser to arrange a tip of the pipette in a plurality of positions in a horizontal direction, the plurality of positions being within an opening formed in the container held in the container holder or in the container holder; and determining whether or not the contact between the container held in the container holder or the container holder and the pipette is detected by the contact detector.

2. The analyzer of claim 1, wherein
the container holder is a container transporter for transporting the held container;
the controller, in the position conforming process, controls the container transporter so as to position the opening at a predetermined stop position, and controls the liquid dispenser so that the tip of the pipette can be disposed at a plurality of positions along the horizontal direction within the opening.

3. The analyzer of claim 1 or 2, wherein
the plurality of positions are shifted in a horizontal direction from the center of the opening so that the directions from the center are mutually different.

4. The analyzer of claim 3, wherein
the controller, in the position confirming process, disposes the tip of the pipette within the opening at a plurality of positions shifted in mutually opposite directions from the center of the opening.

5. The analyzer of claim 3 or 4, wherein
the controller, in the position confirming process, disposed the tip of the pipette within the opening by lowering the pipette from a position shifted in the horizontal direction from the center of the opening.

6. The analyzer of claim 5, wherein
the controller, in the position confirming process, lowers the pipette at a lower speed than when lowering the for aspirating or discharging liquid, and disposes the tip of the pipette within the opening.

7. The analyzer in any of claims 1 through 6, further comprising:
a measurement start instruction receiver configured to receive a measurement start instruction of the liquid, wherein
the controller executes the position confirming process when the measurement start instruction receiver receives a measurement start instruction of the liquid.

8. The analyzer of claim 7, wherein
when the measurement start instruction of the liquid is received by the measurement start instruction receiver, the controller executes the measurement of the liquid even if the contact detector has detected contacted between the container or the container holder and the pipette via the position confirming process.

9. The analyzer of any of claims 1 through 8, wherein
the container transporter and the pipette are made of metal; the contact detector is an electrostatic capacity type contact detector for detecting contact between the pipette and the container holder.

10. The analyzer of any of claims 3, 4 and 7 through 9, wherein
the controller, in the position confirming process, disposes the tip of the pipette at a plurality of positions shifted in a horizontal direction from the center of the opening after lowering the pipette into the opening.

11. The analyzer in any of claims 1 through 10, further comprising:
a display unit for displaying the detection results of the contact detector.

12. The analyzer of any of claims 7 through 11, wherein
the liquid is a sample for quality control;
the measurement start instruction receiver is a quality control start instruction receiver for receiving a measurement start instruction for a sample used for quality control;
the controller executes the position confirming process when the quality control start instruction receiver receives a measurement start instruction of the sample used for quality control..

13. An analyzer comprising:
a container transporter for holding a container accommodating a liquid, and transporting the held container;
a liquid dispenser including a pipette, wherein the liquid dispenser performs a dispensing operation comprising: lowering the pipette; and at least one of aspirating the liquid accommodated in the container transported by the container transporter and discharging a liquid into the container;
a detector configured to measure a measurement sample prepared from a specimen through the dispensing operation;
a contact detector configured to detect contact between the container held in the container transporter or the container transporter and the pipette; and
a controller configured to execute a position confirming process comprising: controlling the container transporter to position the opening provided in the container or the container transporter at a plurality of stop positions in a horizontal direction and controlling the liquid dispenser to dispose the tip of the pipette within the opening at the respective stop positions; and determining whether there is contact between the container or the container transporter and the pipette via the contact detector.

14. An analyzer comprising:
a container holder for holding a container capable of accommodating a liquid;
a container transporter including a holder for holding a container, capable of moving the container held in the holder to the container holder, and installing a rod-shaped body used for position detection in a substantially perpendicular condition;
a detector configured to measure a measurement sample prepared from a specimen through a liquid accommodated in the container held in the container holder;
a contact detector configured to detect contact between the container held in the container holder or the container holder, and the rod-shaped body installed in the container transporter; and
a controller configured to execute a position confirming process comprising: controlling the container transporter to dispose the tip of the rod-shaped body in a plurality of positions in a horizontal direction within the opening provided in the container or the container holder; and determining whether or not the contact between the container held in the container holder or the container holder and the rod-shaped body is detected by the contact detector.

15. A pipette position confirming method in an analyzer having a container holder for holding a container capable of accommodating a liquid and a pipette for aspirating a liquid accommodated in the container held in the container holder and/or discharging liquid into the container, comprising:
(a) disposing the tip of the pipette at a plurality of positions in a horizontal direction within an opening provided in the container or the container holder; and
(b) outputting an alert when contact is detected between the container held in the container holder or the container holder and the pipette.
